# EUROPÄISCHE PATENTSCHRIFT

(11) **EP 3 588 741 B1**
(45) Veröffentlichungstag und Bekanntmachung des Hinweises auf die Patenterteilung: **15.12.2021**
(21) Anmeldenummer: 19176269.9
(22) Anmeldetag: 23.05.2019
(51) Int. Cl.: H02K 1/27

(54) **ROTOR EINES ELEKTROMOTORS**
ROTOR OF AN ELECTRIC MOTOR
ROTOR D'UN MOTEUR ÉLECTRIQUE

(30) Priorität: 26.06.2018 DE 102018115336
(43) Veröffentlichungstag der Anmeldung: 01.01.2020
(60) Teilanmeldung: 20164077.8
(73) Patentinhaber: EBM-PAPST ST. GEORGEN GMBH & CO. KG, 78112 St. Georgen (DE)
(72) Erfinder: Kienzler, Andreas, 78048 Villingen-Schwenningen (DE)
(74) Vertreter: Staeger & Sperling Partnerschaftsgesellschaft mbB

(56) Entgegenhaltungen:
- DE-A1- 2 728 138
- DE-A1-102004 006 933
- DE-C2- 2 728 138
- DE-U1- 20 308 608
- DE-U1-202005 010 000
- JP-A- 2000 166 146
- US-A1- 2008 036 313

## Beschreibung

Die Erfindung betrifft einen Rotor eines Elektromotors mit einem Rotorgehäuse und einem innenseitig an dem Rotorgehäuse verklebungsfrei formschlüssig angeordneten Permanentmagneten.

Herkömmlicherweise werden die Permanentmagnete in dem Rotorgehäuse verklebt, um sicherzustellen, dass bei mechanischer Beanspruchung der Magnet an seiner vordefinierten Position verbleibt und sich nicht axial aus dem Rotorgehäuse herausbewegt oder schleift. Insbesondere Vibrationen oder magnetischer Zug sind Einflussgrößen, die stets auf den Magneten wirken und eine ungewollte Positionsverlagerung herbeiführen können. Die Sicherung durch Verkleben funktioniert in der Praxis ohne Probleme, es bedarf jedoch bei der Herstellung eines zusätzlichen Prozessschritts, der Kosten verursacht.

Druckschriftlicher Stand der Technik im vorliegenden technischen Gebiet ist beispielsweise offenbart in den Dokumenten DE 10 2004 006 933 A1, DE 20 2005 010 000 U1, US 2008/036313 A1 und DE 203 08 608 U1.

Der Erfindung liegt deshalb die Aufgabe zugrunde, einen Rotor bereit zu stellen, der mit weniger Verfahrensschritten herstellbar ist und gleichzeitig eine Fixierung des Permanentmagneten im Rotorgehäuse sicherstellt, ohne den Magneten im Rotorgehäuse zu verkleben.

Diese Aufgabe wird durch die Merkmalskombination gemäß Patentanspruch 1 gelöst.

Erfindungsgemäß wird ein Rotor eines Elektromotors mit einem Rotorgehäuse und einem innenseitig an dem Rotorgehäuse verklebungsfrei formschlüssig angeordneten Permanentmagneten vorgeschlagen, wobei das Rotorgehäuse zumindest eine axial offene Seite aufweist, über die der Permanentmagnet in das Rotorgehäuse einführbar ist. An dem Rotorgehäuse ist außenseitig ein über den Rotor anzutreibendes Funktionselement angeordnet, das an der mindestens einen axial offenen Seite des Rotorgehäuses zumindest eine sich in radialer Richtung zu einer Rotationsachse des Rotors erstreckende Fixiernase aufweist, welche einen Innendurchmesser des Rotorgehäuses lokal verringert sowie in axialer Projektion gesehen den Permanentmagneten über eine Fixierlänge überstreckt und damit in dem Rotorgehäuse sichert.

Das Funktionselement ist in einer bevorzugten Ausführung als Lüfterrad eines Ventilators ausgebildet. Soweit im Folgenden auf das Funktionselement Bezug genommen wird, kann darunter stets als eine Ausführung ein Lüfterrad verstanden werden.

Die Fixierung des Permanentmagneten erfolgt erfindungsgemäß sowohl über die formschlüssige Anordnung im Rotorgehäuse als auch über die mindestens eine an dem Funktionselement ausgebildete radial vorstehende Fixiernase, welche sich über einen Außenumfang des Permanentmagneten zur Rotationsachse hin erstreckt und dadurch den Permanentmagneten in axialer Richtung gegen eine Bewegung aus dem Rotorgehäuse heraus sichert. Der Permanentmagnet ist vorzugsweise als Gummimagnet ausgebildet, wobei magnetisierbare Bestandteile in eine Gummimasse integriert sind. Der Gummimagnet wird in das Rotorgehäuse axial eingeschoben bzw. eingerollt und dabei an der mindestens einen Fixiernase vorbeigeführt, die anschließend im montierten Zustand den Magneten in radialer Richtung übergreift und somit axial fixiert.

Erfindungsgemäß ist die mindestens eine Fixiernase als Hinterschnitt an einem axialen Außenrand des anzutreibenden Funktionselements ausgebildet. Günstig ist eine Lösung, bei der das anzutreibende Funktionselement und mithin die mindestens eine Fixiernase aus Kunststoff gebildet sind und das Funktionselement auf das Rotorgehäuse im Spritzguss aufgespritzt ist. Vorzugsweise ist auch das Rotorgehäuse aus Kunststoff und zusammen mit dem Funktionselement im Spritzgussverfahren hergestellt. Herstellbar ist die Fixiernase als Hinterschnitt beispielsweise durch ein Spritzgussverfahren unter Verwendung eines in der Technik bekannten "faltbaren Kerns". Dabei durchläuft das geschossene Werk zunächst den Spritzgießzyklus. Nach dem Erreichen der Entformungstemperatur wird die Form in der Trennebene geöffnet. Im nächsten Schritt wird ein Teil der Auswerferseite geöffnet und ein innerer Stützkern aus dem Faltkern herausgezogen. Durch die fehlende Stützwirkung bewegen sich Stützsegmente nach innen. Zusammen mit diesen Stützelementen bewegen sich auch die äußeren konturbildenden Segmente nach innen und geben damit den Hinterschnitt frei. Eine weiter vorteilhafte Ausführung des Rotors sieht vor, dass die mindestens eine Fixiernase elastisch in radialer Richtung auslenkbar ist. Die Elastizität kann beispielsweise durch das Kunststoffmaterial bereitgestellt werden. Somit kann der Permanentmagnet zur Montage vergleichsweise einfach an der mindestens einen elastisch ausgelenkten Fixiernase vorbei in das Rotorgehäuse eingeführt werden. Sobald der Magnet die mindestens einen Fixiernase passiert hat, bewegt sich diese elastisch zurück in ihren Grundzustand und übergreift den Magneten.

Der Rotor ist in einer vorteilhaften Variante dadurch gekennzeichnet, dass die mindestens eine Fixiernase den Innendurchmesser des Rotorgehäuses lokal um 1-5% verringert. Diese geringe Radialerstreckung ist ausreichend, um die Fixierung des Magneten im Rotorgehäuse sicherzustellen, gewährleistet jedoch gleichzeitig, dass der Magnet in das Rotorgehäuse einführbar bleibt und formschlüssig an die Innenwand des Rotorgehäuse zur Anlage gebracht werden kann.

In einem bevorzugten Ausführungsbeispiel sind an dem Funktionselement mindestens drei Fixiernasen in Umfangsrichtung beabstandet ausgebildet. Generell ist vorteilhaft, die Fixiernasen in Umfangsrichtung gleichmäßig verteilt vorzusehen. Bei einer Anordnung von genau drei Fixiernasen erfolgt die Positionierung somit vorzugsweise im in Umfangsrichtung gesehen jeweils gleichen 120°-Abstand zueinander. Jede der Fixiernasen erstreckt sich dabei in Umfangsrichtung vorzugsweise über 3-15° entlang des Innenumfangs des Rotorgehäuses. Somit wird eine ausreichende Stabilität der Fixiernasen bei gleichzeitig geringem Materialaufwand und einer sich daraus zusätzlich ergebenden elastischen Auslenkbarkeit gewährleistet.

Bei dem Rotor ist ferner als Ausführungsvariante vorgesehen, dass das Rotorgehäuse als eine einseitig axial offene Rotorglocke mit einem topfförmigen Aufnahmeraum ausgebildet ist, in die der Permanentmagnet vollständig eingesetzt wird. Im Aufnahmeraum entlang der Rotationsachse weist der Rotor zudem eine Welle auf, die mit dem Funktionselement und/oder dem Rotorgehäuse in Eingriff steht.

In einer günstigen kompakten Aufbauweise des Rotors umschließt das Funktionselement das Rotorgehäuse außenseitig vollständig.

Zudem wird in einer Ausführungsvariante des Rotors vorgesehen, dass ein zur axial offenen Seite gerichteter Außenrandabschnitt des Rotorgehäuses einen Eingriffsabschnitt für das Funktionselement bestimmt, der durch eine innenwandseitig an dem Rotorgehäuse verlaufende Rundung ausgebildet ist. Der Eingriffsabschnitt bietet die Möglichkeit, das Funktionselement gegenüber axialen Relativbewegungen an dem Rotorgehäuse zu fixieren.

Hierzu weist das Funktionselement an seinem axialen Außenrand einen umlaufenden radial vorstehenden Fixierwulst auf, der den Eingriffsabschnitt des Rotorgehäuses in radialer und axialer Richtung zumindest abschnittsweise formschlüssig übergreift.

Ferner sieht eine günstige Ausführung des Rotors vor, dass die jeweilige Fixiernase einstückig an dem radial vorstehenden Fixierwulst des Funktionselements ausgebildet ist. Somit können zwei Funktionen durch den Fixierwulst erfüllt werden, zum einen die axiale Fixierung des Funktionselements an dem Rotorgehäuse, zum anderen die axiale Fixierung des in den Aufnahmeraum des Rotorgehäuses eingesetzten bzw. eingerollten Permanentmagneten.

Eine Weiterbildung des Rotors ist dadurch gekennzeichnet, dass das Funktionselement in einem an die axial offene Seite des Rotorgehäuses angrenzenden Abschnitt zumindest im Bereich der mindestens einen Fixiernase mindestens eine Aussparung aufweist, die sich von einem axialen Außenrand des Funktionselements über eine vorbestimmte Länge in axialer Richtung parallel zum Rotorgehäuse erstreckt. Vorzugsweise werden in Umfangsrichtung gleichmäßig verteilt eine Vielzahl von Aussparungen an dem Funktionselement vorgesehen, die einerseits den Materialaufwand verringern, andererseits dazu beitragen, dass der Permanentmagnet leichter an den Fixiernasen vorbei in den Aufnahmeraum des Rotorgehäuses einsetzbar ist.

Die Erfindung umfasst ferner einen Ventilator mit einem Elektromotor mit einem vorstehend beschriebenen Rotor.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine seitliche Schnittansicht durch einen Rotor;
- Fig. 2: eine Detailansicht X aus Figur 1,
- Fig. 3: eine axiale Draufsicht auf den Rotor aus Figur 1.

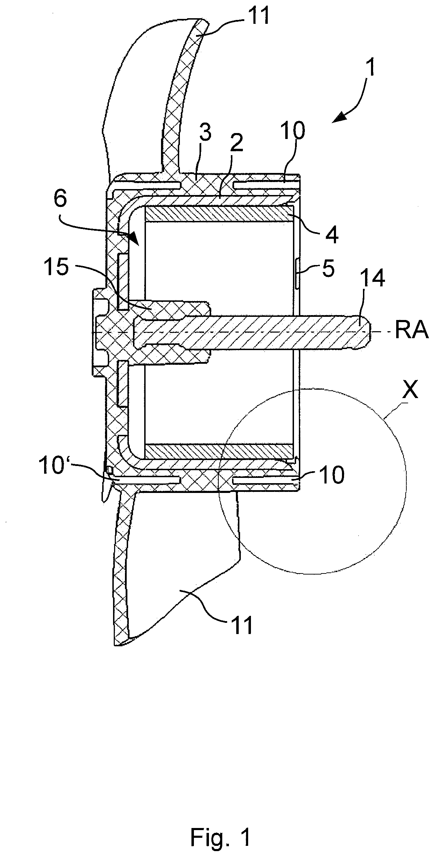

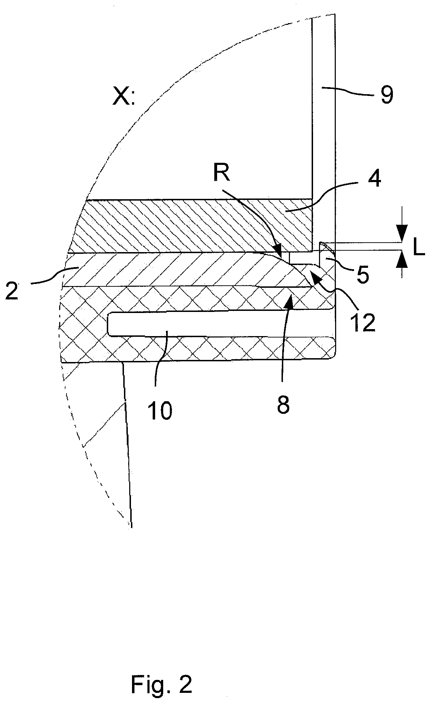

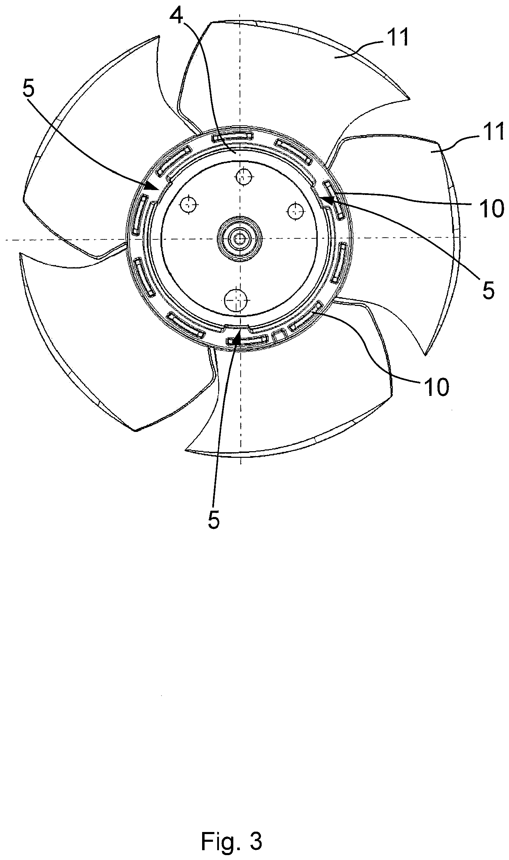

In den Figuren 1-3 ist ein Ausführungsbeispiel des Rotors 1 eines Elektromotors dargestellt, wobei Figur 1 den Rotor in einer seitlichen Schnittansicht, Figur 3 in einer axialen Draufsicht zeigt. Das in Figur 1 mit "X" gekennzeichnete Detail ist in Figur 2 vergrößert wiedergegeben.

Unter Bezugnahme auf die Figuren 1 - 3 umfasst der Rotor 1 das im Spritzgussverfahren aus Kunststoff hergestellte einstückige Rotorgehäuse 2, auf das unmittelbar das ebenfalls im Spritzgussverfahren unter Nutzung eines faltbaren Kerns erzeugte Funktionselement 3 einstückig aufgespritzt ist, wobei das Funktionselement in der gezeigten Ausführung ein Lüfterrad 3 mit Lüfterradschaufeln 11 ist. Das Rotorgehäuse 2 ist als eine einseitig axial offene Rotorglocke mit einem topfförmigen Aufnahmeraum 6 ausgeführt und wird von dem Lüfterrad 3 außenseitig sowohl axialseitig als auch über die gesamte äußere Umfangsfläche vollständig umschlossen. Das Lüfterrad 3 weist eine sich in axialer Richtung in den Aufnahmeraum 6 erstreckende Nabe 15 auf, in der die entlang der Rotationsachse verlaufende Welle 14 aufgenommen ist. In den Aufnahmeraum 6 ist über die axial offene Seite des Rotors 1 der als Gummimagnet ausgebildete Permanentmagnet 4 eingesetzt und liegt formschlüssig, jedoch verklebungsfrei an der Innenwandfläche des Rotorgehäuses 2 an.

In der Detailansicht X gemäß Figur 2 und der Draufsicht gemäß Figur 3 ist zu erkennen, dass das Lüfterrad 3 an der axial offenen Seite des Rotorgehäuses 2 an seinem axialen Außenrand einen umlaufenden radial zur Rotationsachse RA vorstehenden Fixierwulst 9 aufweist, der drei sich in radialer Richtung zu der Rotationsachse RA des Rotors 1 erstreckende Fixiernasen 5 bildet. Die drei Fixiernasen 5 sind in Umfangsrichtung jeweils im Abstand von 120° positioniert und erstrecken sich jeweils in Umfangsrichtung um ca. 15° des Fixierwulstes 9. Jede der Fixiernasen 5 überstreckt den Permanentmagneten 4 in der axialer Projektion gemäß Figur 3 gesehen über die Fixierlänge L (siehe Figur 2) und verringert den Innendurchmesser des Rotorgehäuses 2 lokal um 3%. Die Fixiernasen 5 sind an dem Fixierwulst 9 einstückig als Hinterschnitt ausgebildet und verlaufen senkrecht zur Rotationsachse RA. Beim axialen Einführen des Permanentmagneten 4 in den Aufnahmeraum 6 werden die Fixiernasen 5 elastisch nach radial außen gedrückt und schnappen in den Grundzustand zurück, sobald der Permanentmagnet 4 vollständig in dem Rotorgehäuse 2 positioniert ist. Im formschlüssig an der Innenwand des Rotorgehäuses 2 fixierten Zustand sind, wie in Figur 2 zu erkennen, die Fixiernasen 5 axial von dem Permanentmagneten 4 beabstandet und ermöglichen eine gewisse Axialbewegung des Permanentmagneten 4 innerhalb des Aufnahmeraums 6, verhindern jedoch bei einer durch mechanische Belastung ausgelöste stärkere Axialbewegung des Permanentmagneten 4 aus dem Aufnahmeraum 6 hinaus.

Neben der axialen Fixierung des Permanentmagneten 4 wird über den Fixierwulst 9 zudem eine Anbindung an das Rotorgehäuse 2 gewährleistet. Der zur axial offenen Seite gerichtete Außenrandabschnitt des Rotorgehäuses 2 weist hierzu den durch die innenwandseitig an dem Rotorgehäuse 2 verlaufende Rundung R ausgebildeten Eingriffsabschnitt 8 auf, in den ein teils radial, teils axial vorspringender Haltesteg 12 des Fixierwulstes 9 mit einer zu der Rundung R entsprechenden Form eingreift und das freie axiale Ende des Eingriffabschnitts 8 des Rotorgehäuses 2 formschlüssig umgreift.

In Umfangsrichtung verteilt sind an dem das Rotorgehäuse 2 außenmantelseitig umschließenden Abschnitt des Lüfterrads 3 mehrere sich in Axialrichtung erstreckende Aussparungen 10, 10' vorgesehen. Die Aussparungen 10 sind in Umfangsrichtung gesehen breiter als die Fixiernasen 5 und jeweils im gleichen Abstand zueinander angeordnet. In Radialrichtung gesehen überlappen sich die Fixiernasen 5 und die Aussparungen 10 zumindest abschnittsweise. In einer axialen Ebene, jedoch axial beabstandet zu den sich an die axiale Öffnung anschließenden Aussparungen 10 sind zudem auch auf der axial geschlossenen Seite des Rotors 1 mehrere Aussparungen 10' vorgesehen.

Auch wenn als Ausführungsbeispiel für das Funktionselement nur ein Lüfterrad gezeigt ist, können auch andere anzutreibende Elemente wie beispielsweise Kühlflügel auf das Rotorgehäuse gespritzt werden, welche die Fixiernasen ausbilden.

## Patentansprüche

1. Rotor (1) eines Elektromotors mit einem Rotorgehäuse (2) und einem innenseitig an dem Rotorgehäuse (2) verklebungsfrei formschlüssig angeordneten Permanentmagneten (4), wobei das Rotorgehäuse (2) zumindest eine axial offene Seite aufweist, über die der Permanentmagnet in das Rotorgehäuse (2) einführbar ist, wobei an dem Rotorgehäuse (2) außenseitig ein über den Rotor (1) anzutreibendes Funktionselement (3) angeordnet ist, das an der mindestens einen axial offenen Seite des Rotorgehäuses (2) zumindest eine sich in radialer Richtung zu einer Rotationsachse (RA) des Rotors (1) erstreckende Fixiernase (5) aufweist, welche einen Innendurchmesser des Rotorgehäuses (2) lokal verringert sowie in axialer Projektion gesehen den Permanentmagneten (4) über eine Fixierlänge (L) überstreckt, wobei die mindestens eine Fixiernase (5) als Hinterschnitt an einem axialen Außenrand des anzutreibenden Funktionselements ausgebildet ist.

2. Rotor nach Anspruch 1, **dadurch gekennzeichnet, dass** das Rotorgehäuse (2) und das anzutreibende Funktionselement aus Kunststoff gebildet sind und das Funktionselement auf das Rotorgehäuse (2) im Spritzguss aufgespritzt ist.

3. Rotor nach einem der vorhergehenden Ansprüche, **dadurch gekennzeichnet, dass** die mindestens eine Fixiernase (5) elastisch in radialer Richtung auslenkbar ist.

4. Rotor nach einem der vorhergehenden Ansprüche, **dadurch gekennzeichnet, dass** der Permanentmagnet (4) als Gummimagnet ausgebildet ist.

5. Rotor nach einem der vorhergehenden Ansprüche, **dadurch gekennzeichnet, dass** die mindestens eine Fixiernase (5) den Innendurchmesser des Rotorgehäuses (2) lokal um 1-5% verringert.

6. Rotor nach einem der vorhergehenden Ansprüche, **dadurch gekennzeichnet, dass** mindestens drei Fixiernasen (5) in Umfangsrichtung beabstandet an dem Funktionselement ausgebildet sind.

7. Rotor nach einem der vorhergehenden Ansprüche, **dadurch gekennzeichnet, dass** das Rotorgehäuse (2) als eine einseitig axial offene Rotorglocke mit einem topfförmigen Aufnahmeraum (6) ausgebildet ist, in die der Permanentmagnet (4) eingesetzt ist.

8. Rotor nach einem der vorhergehenden Ansprüche, **dadurch gekennzeichnet, dass** das Funktionselement das Rotorgehäuse (2) außenseitig vollständig umschließt.

9. Rotor nach einem der vorhergehenden Ansprüche, **dadurch gekennzeichnet, dass** ein zur axial offenen Seite gerichteter Außenrandabschnitt (7) des Rotorgehäuses (2) einen Eingriffsabschnitt (8) für das Funktionselement bestimmt, der durch eine innenwandseitig an dem Rotorgehäuse (2) verlaufende Rundung (R) ausgebildet ist

10. Rotor nach dem vorhergehenden Anspruch, **dadurch gekennzeichnet, dass** das Funktionselement an seinem axialen Außenrand einen umlaufenden radial vorstehenden Fixierwulst (9) aufweist, der den Eingriffsabschnitt (8) des Rotorgehäuses (2) in radialer und axialer Richtung zumindest abschnittsweise formschlüssig übergreift.

11. Rotor nach dem vorhergehenden Anspruch, **dadurch gekennzeichnet, dass** die jeweilige Fixiernase (5) einstückig an dem radial vorstehenden Fixierwulst (9) des Funktionselements ausgebildet ist.

12. Rotor nach einem der vorhergehenden Ansprüche, **dadurch gekennzeichnet, dass** das Funktionselement in einem an die axial offene Seite des Rotorgehäuses (2) angrenzenden Abschnitt zumindest im Bereich der mindestens einen Fixiernase (5) mindestens eine Aussparung (10) aufweist, die sich von einem axialen Außenrand des Funktionselements über eine vorbestimmte Länge in axialer Richtung parallel zum Rotorgehäuse (2) erstreckt.

13. Rotor nach einem der vorhergehenden Ansprüche, **dadurch gekennzeichnet, dass** das Funktionselement als Lüfterrad (3) mit Lüfterradschaufeln (11) eines Ventilators ausgebildet ist.

14. Ventilator mit einem Elektromotor umfassend einen Rotor (1) nach einem der vorhergehenden Ansprüche.

## Claims

1. A rotor (1) of an electric motor with a rotor housing (2) and a permanent magnet (4) that is arranged on the inside of the rotor housing (2) in a form-fitting manner without adhesion, wherein the rotor housing (2) has at least one axially open side via which the permanent magnet can be inserted into the rotor housing (2), wherein a functional element (3) that is to be driven via the rotor (1) is arranged on the outside of the rotor housing (2) and, on the at least one axially open side of the rotor housing (2), has at least one fixing lug (5) that extends in the radial direction relative to an axis of rotation (RA) of the rotor (1), locally reduces an inner diameter of the rotor housing (2) and, as seen in axial projection, extends over the permanent magnet (4) over a fixing length (L), the at least one fixing lug (5) being embodied as an undercut on an axial outer edge of the functional element that is to be driven.

2. The rotor as set forth in claim 1, **characterized in that** the rotor housing (2) and the functional element that is to be driven are made of plastic, and the functional element is injection-molded onto the rotor housing (2).

3. The rotor as set forth in one of the preceding claims, **characterized in that** the at least one fixing lug (5) can be deflected elastically in the radial direction.

4. The rotor as set forth in one of the preceding claims, **characterized in that** the permanent magnet (4) is embodied as a rubber magnet.

5. The rotor as set forth in one of the preceding claims, **characterized in that** the at least one fixing lug (5) locally reduces the inner diameter of the rotor housing (2) by 1-5%.

6. The rotor as set forth in one of the preceding claims, **characterized in that** at least three fixing lugs (5) are embodied on the functional element so as to be spaced apart in the circumferential direction.

7. The rotor as set forth in one of the preceding claims, **characterized in that** the rotor housing (2) is embodied as a rotor bell that is axially open on one side and has a pot-shaped receiving space (6) into which the permanent magnet (4) is inserted.

8. The rotor as set forth in one of the preceding claims, **characterized in that** the functional element completely surrounds the rotor housing (2) on the outside.

9. The rotor as set forth in one of the preceding claims, **characterized in that** an outer edge portion (7) of the rotor housing (2) that is oriented toward the axially open side defines an engagement portion (8) for the functional element that is instantiated by a rounding (R) that extends on the inner wall of the rotor housing (2).

10. The rotor as set forth in the preceding claim, **characterized in that** the functional element has, on its axial outer edge, a circumferential, radially protruding fixing bead (9) that engages at least in sections over the engagement portion (8) of the rotor housing (2) in a form-fitting manner in radial and axial directions.

11. The rotor as set forth in the preceding claim, **characterized in that** the respective fixing lug (5) is integrally formed on the radially protruding fixing bead (9) of the functional element.

12. The rotor as set forth in one of the preceding claims, **characterized in that** the functional element, in a portion adjoining the axially open side of the rotor housing (2), has at least one recess (10) at least in the region of the at least one fixing lug (5), which at least one recess (10) extends from an axial outer edge of the functional element over a predetermined length in the axial direction parallel to the rotor housing (2).

13. The rotor as set forth in one of the preceding claims, **characterized in that** the functional element is embodied as a fan wheel (3) with fan impeller blades (11) of a fan.

14. A fan with an electric motor comprising a rotor (1) as set forth in one of the preceding claims.

## Revendications

1. Rotor (1) d'un moteur électrique, comprenant un carter de rotor (2) et un aimant permanent (4) disposé côté intérieur sur le carter de rotor (2) par complémentarité de forme sans collage, le carter de rotor (2) présentant au moins un côté axialement ouvert par lequel l'aimant permanent peut être introduit dans le carter de rotor (2), dans lequel, sur le carter de rotor (2) est disposé un élément fonctionnel (3) à entraîner par l'intermédiaire du rotor (1) et qui présente sur ledit au moins un côté axialement ouvert du carter de rotor (2) au moins un tenon de fixation (5) s'étendant dans la direction radiale vers un axe de rotation (RA) du rotor (1) et qui diminue localement un diamètre intérieur du carter de rotor (2) et couvre, vu en projection axiale, l'aimant permanent (4) sur une longueur de fixation (L), ledit au moins un tenon de fixation (5) étant réalisé sous forme de contre-dépouille sur un bord extérieur axial de l'élément fonctionnel à entraîner.

2. Rotor selon la revendication 1, **caractérisé en ce que** le carter de rotor (2) et l'élément fonctionnel à entraîner sont formés en matière plastique, et l'élément fonctionnel est moulé par injection sur le carter de rotor (2).

3. Rotor selon l'une quelconque des revendications précédentes, **caractérisé en ce que** ledit au moins un tenon de fixation (5) peut être dévié élastiquement dans la direction radiale.

4. Rotor selon l'une quelconque des revendications précédentes, **caractérisé en ce que** l'aimant permanent (4) est réalisé sous forme d'aimant en caoutchouc.

5. Rotor selon l'une quelconque des revendications précédentes, **caractérisé en ce que** ledit au moins un tenon de fixation (5) diminue localement le diamètre intérieur du carter de rotor (2) de 1 à 5 %.

6. Rotor selon l'une quelconque des revendications précédentes, **caractérisé en ce qu'**au moins trois tenons de fixation (5) sont réalisés sur l'élément fonctionnel de manière espacée dans la direction circonférentielle.

7. Rotor selon l'une quelconque des revendications précédentes, **caractérisé en ce que** le carter de rotor (2) est réalisé sous la forme d'une cloche de rotor axialement ouverte d'un seul côté et dotée d'un espace de réception (6) en forme de pot dans lequel est inséré l'aimant permanent (6).

8. Rotor selon l'une quelconque des revendications précédentes, **caractérisé en ce que** l'élément fonctionnel entoure complètement le carter de rotor (2) sur le côté extérieur.

9. Rotor selon l'une quelconque des revendications précédentes, **caractérisé en ce qu'**une partie de bord extérieur (7) orientée vers le côté axialement ouvert du carter de rotor (2) détermine une partie de mise en prise (8) pour l'élément fonctionnel qui est réalisée par un arrondi (R) s'étendant sur un côté de paroi intérieure sur le carter de rotor (2).

10. Rotor selon la revendication précédente, **caractérisé en ce que** l'élément fonctionnel présente sur son bord extérieur axial un bourrelet de fixation (9) périphérique, radialement en saillie, qui recouvre la partie de mise en prise (8) du carter de rotor (2) dans la direction radiale et axiale au moins par endroits par complémentarité de forme.

11. Rotor selon la revendication précédente, **caractérisé en ce que** le tenon de fixation (5) respectif est réalisé d'une seule pièce sur le bourrelet de fixation (9) radialement en saillie de l'élément fonctionnel.

12. Rotor selon l'une quelconque des revendications précédentes, **caractérisé en ce que** l'élément fonctionnel présente dans une partie adjacente au côté axialement ouvert du carter de rotor (2), au moins au niveau du au moins un tenon de fixation (5), au moins un évidement (10) qui s'étend d'un bord extérieur axial de l'élément fonctionnel sur une longueur prédéterminée dans la direction axiale en parallèle au carter de rotor (2).

13. Rotor selon l'une quelconque des revendications précédentes, **caractérisé en ce que** l'élément fonctionnel est réalisé sous forme d'hélice de ventilateur (3) dotée de pales d'hélice de ventilateur (11) d'un ventilateur.

14. Ventilateur doté d'un moteur électrique comprenant un rotor (1) selon l'une quelconque des revendications précédentes.
